# EUROPÄISCHE PATENTSCHRIFT

(11) **EP 0 561 006 B1**
(45) Veröffentlichungstag und Bekanntmachung des Hinweises auf die Patenterteilung: **06.09.1995**
(21) Anmeldenummer: 92103228.0
(22) Anmeldetag: 26.02.1992
(51) Int. Cl.: B29C 53/80, B65H 23/10, B29C 53/56

(54) **Vorrichtung zum regulierbaren Spannen eines Faserbandes oder -stranges in einer Anlage zum Wickeln von Gegenständen aus faserarmiertem Kunststoff**
Apparatus for controlled tensioning of a fibre reinforced web or strand in a window machine for producing fibre-reinforced plastics articles
Dispositif pour la réglage de la tension d'une nappe ou d'un écheveau de fibres dans une installation d'enroulement pour la fabrication d'objets en matière plastique renforcée de fibres

(43) Veröffentlichungstag der Anmeldung: 22.09.1993
(73) Patentinhaber: BOLENZ & SCHÄFER MASCHINENFABRIK GmbH, D-35216 Biedenkopf (DE)
(72) Erfinder: Neubert, Mike, Dipl.-Ing., W-3563 Dautphetal-Wolfgruben 7 (DE)
(74) Vertreter: Thielmann, Paul, Dipl.-Landw.

(56) Entgegenhaltungen:
- DE-U- 8 805 929
- GB-A- 1 434 922
- US-A- 2 048 754

## Beschreibung

Die Erfindung betrifft eine Vorrichtung zum kontrollierbaren Spannen eines Faserbandes oder -stranges in einer Anlage zum Wickeln von Gegenständen aus faserarmiertem Kunststoff mit wenigstens zwei im Abstand voneinander achsparallel gelagerten Riemenscheiben und einem sie umlaufenden Riemen, wobei zwischen den Riemenscheiben eine von dem Rücken des Riemens auf einem Teil ihres Umfanges umlaufene, das zu spannende Faserband gegen den Rücken des Riemens haltende Gegenrolle in einer solchen Position gelagert ist, daß der Riemen von der ausgangsseitigen Riemenscheibe an der Gegenrolle mit dem sie umlaufenden Teil des Riemens vorbei zur einlaufseitigen Riemenscheibe frei beweglich ist, das Faserband zwischen dem Riemen und der Gegenrolle läuft und wobei auf wenigstens eine der das Faserband kontaktierenden Flächen eine Bremskraft wirkt.

Vorrichtungen mit diesen Gattungsmerkmalen sind bereits bekannt. Aus dem DE-U-88 05 929.4 geht eine Vorrichtung zum Spannen von Rovings in einer Anlage zum Wickeln von Gegenständen aus faserarmiertem Kunststoff hervor, die einen Rollensatz aus zwei aneinander abrollenden, den Roving zwischen sich führenden Rollen aufweist.

Eine der Rollen ist mittels eines Bremsbandes mit steuerbarer Kraft bremsbar.
Diese Vorrichtung hat den Vorteil, daß sie nur wenig Bauraum benötigt. Der Roving wird in einem der Spannvorrichtung nachgeordneten Harzbad mit flüssigem Kunstharz getränkt und auf einen Wickelkern gewickelt, auf dem das Kunstharz weitgehend aushärtet. Dabei ist eine Vorrichtung zum Spannen des Rovings erforderlich, damit die Rovinglagen in der Wickelung auf dem Wickelkern dicht und gleichmäßig aufeinanderliegen.

Inzwischen sind auch Faserbänder entwickelt worden und allgemein zur Verbreitung gelangt, bei denen die Armierungsfasern schon vor dem Verarbeitungsprozeß in thermoplastischen Kunststoff eingebettet worden sind. Dabei sind sie mit dem sie umgebenden Kunststoff zu einem flachen, flexiblen Band geformt. Solche Bänder kommen in Form von Rollen zur Verarbeitung, wobei jeweils das Band unmittelbar vor dem Aufwickeln auf einen Wickelkern in einer Wickelanlage bis an die Schmelztemperatur des die Fasern umgebenden Kunststoffes erwärmt wird.

Um ein fehlerfreies Wickelprodukt zu erzeugen, muß das Band unter einer wesentlich größeren Zugspannung gewickelt werden, als dies bei der Verarbeitung von unmittelbar vor dem Aufwickeln mit flüssigem Kunstharz getränkten Rovings erforderlich ist. Die erforderliche Zugspannung kann mit einer Spannvorrichtung gemäß dem GM 88 05 929.4 - wenn überhaupt - nur mit erheblichen Beschädigungen des Faserbandes erreicht werden. Bei der sehr kleinen zum Spannen des Bandes zwischen zwei Rollen zur Verfügung stehenden Berührungsfläche wäre ein so hoher Druck erforderlich, daß an einem Band, welches aus in Längsrichtung parallel nebeneinanderliegend in Kunststoff eingebetteten Fasern besteht, erhebliche Quetschschäden entstehen würden.

Durch die GB-A-1 434 922 wurde eine andere Vorrichtung der eingangs definierten Gattung bekannt. Dabei besteht der den Faserstrang spannende Teil aus einem über drei an einem Träger an den Ecken eines Dreiecks frei drehbar gelagerten Rollen laufenden Riemen und einer Gegenrolle, unter der der Riemen hindurchläuft. Der Faserstrang wird zwischen der Gegenrolle und dem Riemen geführt. Dabei wird die Gegenrolle durch einen Reibklotz gebremst. Die auf den Faserstrang wirkende Bremskraft geht allein von der Gegenrolle aus. Hierbei ist die für die Bremskraftübertragung zur Verfügung stehende Fläche allein auf die Strecke des Faserbandes beschränkt, die innerhalb des Umschlingungswinkels auf der Gegenrolle liegt. Die Bremskraft wird nicht nur auf einer verhältnismäßig kurzen Strecke, sondern auch nur von einer Seite her auf das Faserband übertragen. So ist auch bei einem hohen Reibwert der Kontaktfläche auf der Gegenrolle ein gewisser Schlupf nicht vermeidbar.
Um dem Schlupf entgegenzuwirken, muß der Riemen sehr straff gespannt sein. Dafür ist bei dieser Vorrichtung eine besondere Spanneinrichtung vorgesehen.
Die dem Gegenstand der vorliegenden Anmeldung zugrundeliegende Aufgabe ist mit dieser bekannten Vorrichtung nicht lösbar. Es können insbesondere solche Faserbänder nicht befriedigend verarbeitet werden, bei denen die Faserarmierung schon vor dem Verarbeitungsprozeß in einen thermoplastischen Kunststoff eingeschlossen worden ist.
Beim Verarbeitungsprozeß werden sie unmittelbar vor dem Aufwickeln auf einen Wickelkern bis an die Schmelztemperatur des Kunststoffes erwärmt. Um ein fehlerfreies Wickelprodukt zu erzeugen, müssen die Bänder unter einer bis nahe an ihre Bruchlast reichenden Spannung mit gleichmäßiger Geschwindigkeit auf den Wickelkern kommen. Diese Leistung ist mit einer aus der GB-A-1 434 922 bekannten Vorrichtung nicht erzielbar.

Indessen sind auch Spannvorrichtungen für Bänder allgemein bekannt, wobei das Spannen des Bandes ohne Quetschbelastung erfolgt. Das Band wird mäanderförmig über eine Doppelreihe von bremsbaren Rollen geleitet, wobei es wechselseitig die Rollen jeweils auf einem möglichst großen Teil ihres Umfanges umschlingt. Die Spannung des Bandes wird dadurch erzielt, daß die auf den Rollen liegende Bremskraft durch Reibung abwechselnd auf die eine oder andere Seite des Bandes übertragen wird. Dabei muß das Band bei Einleitung in den Bremsrollensatz schon eine Vorspannung haben.

Auch diese Spannvorrichtung hat Nachteile für die Verarbeitung von in Kunststoff einbetteten Faserbändern und zwar in zweierlei Hinsicht:
Solche Bänder sind zwar flexibel. Sie haben aber doch auch eine beträchtliche Steifigkeit. So wird zum einen das mit mehreren 100 DN zu spannende Band bei der erforderlichen sehr hohen Bremskraft durch die wechselseitige Reibung bei gleichzeitiger Biegung insbesondere um kleine Rollen erheblich belastet. So kann es zu Beschädigungen des Bandes kommen, die zu qualitätsmindernden Festigkeitsverlüsten im Wickelprodukt führen können.
Zum andern erfordert eine solche Spannvorrichtung sehr viel Bauraum, weil eine Vielzahl von Rollen erforderlich ist, deren Durchmesser wegen der Steifigkeit des zu spannenden Bandes verhältnismäßig groß sein muß.

Der Erfindung liegt die Aufgabe zugrunde, eine Vorrichtung mit geringstmöglichem Bedarf an Bauraum zum regulierbaren Spannen eines Faserbandes oder -stranges in einer Anlage zum Wickeln von Gegenständen aus faserarmiertem Kunststoff zu schaffen, mit der auch solche Faserbänder, bei denen die Fasern schon vor dem Verarbeitungsprozeß in thermoplastischem Kunststoff eingebettet sind, bis nahe an ihre Bruchlast ohne Beschädigung ihrer Struktur gespannt werden können, wobei eine Vorspannung des Bandes bei dessen Einführung in die Spannvorrichtung nicht erforderlich ist.

Zur Lösung dieser Aufgabe geht die Erfindung aus von einer Vorrichtung mit den in der Beschreibungseinleitung und im Oberbegriff des Anspruchs 1 definierten Merkmalen.
Die gestellte Aufgabe wird erfindungsgemäß dadurch gelöst, daß eine solche Vorrichtung mit den Merkmalen gemäß dem kennzeichnenden Teil des Anpsruchs 1 ausgestattet ist. Weitere Merkmale der Erfindung und alternative Detail-Lösungsvorschläge gehen aus den Ansprüchen 2 bis 9 hervor.

Diese Vorrichtung hat gegenüber den vorstehend beschriebenen bekannten Spannvorrichtungen erhebliche Vorteile: Das Band kann ohne Beschädigung seiner Struktur durch Quetschungen und Biegebelastungen bis an die Grenze seiner Bruchlast gespannt werden, weil die für die Übertragung der Bremskraft erforderliche Fläche sich über eine verhältnismäßig große Länge des Bandes erstreckt und nur wenige Umlenkungen um Rollen erforderlich sind. Es ist auch keine Vorspannung des Bandes bei Eintritt in die Spannvorrichtung erforderlich.

Die Erfindung wird im Folgenden anhand einer sie beispielsweise wiedergebenden Zeichnung näher erläutert. Es zeigen in schematisierter Darstellung:

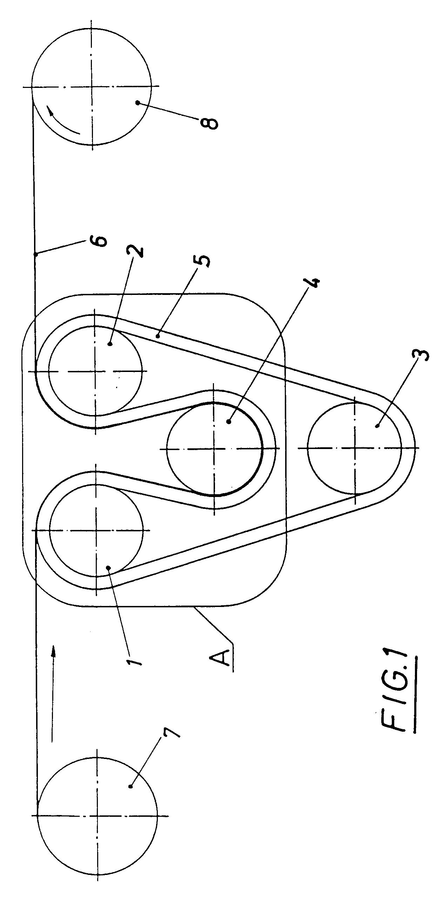

- Fig. 1: Eine Seitenansicht der Spannvorrichtung;
- Fig. 2: eine vergrößerte Darstellung des Ausschnittes A in Fig. 1;
- Fig. 3: einen Schnitt nach der Linie B - B in Fig. 2.

Die erfindungsgemäße Spannvorrichtung besteht aus einem Rollensatz, der bei der in der Zeichnung dargestellten bevorzugten Ausführungsform drei Zahnriemenscheiben **1, 2, 3** aufweist, deren Achsen parallel zueinander auf den Ecken eines Dreiecks angeordnet sind. Innerhalb dieses Dreiecks ist achsparallel zwischen den Zahnriemenscheiben **1, 2, 3** eine Gegenrolle **4** gelagert. Über die Zahnriemenscheiben **1, 2, 3** ist ein Zahnriemen **5** gespannt, der mit seinem Rücken die Gegenrolle **4** umläuft, so daß diese auf dem Rücken des Zahnriemens abrollt. Das zu spannende Faserband **6** läuft von einer Vorratsrolle **7** über die einlaufseitige Zahnriemenscheibe **1** auf dem Rücken des Zahnriemens **5** zwischen diesem und der Gegenrolle **4** hindurch über die auslaufseitige Zahnriemenscheibe **2** zu dem in der Wickelanlage befestigten Wickelkern **8**. Wenn es sich bei dem Faserband **6** um ein solches handelt, bei dem die Fasern in Längsrichtung parallel liegend in einem thermoplastischen Kunststoff eingebettet sind, passiert dieses unmittelbar vor dem Wickelkern **8** eine in der Zeichnung nicht dargestellte Heizeinrichtung, in welcher der die Fasern umgebende Kunststoff bis zum Schmelzpunkt erwärmt wird.

Durch den vom abgezogenen Faserband **6** ausgehenden Antrieb des Zahnriemens **5** im Bereich der Umschlingung der auslaufseitigen Zahnriemenscheibe **2** bei gleichzeitigem Abbremsen beispielsweise der Zwischenzahnriemenscheibe **3** entsteht zwischen der gebremsten Zahnriemenscheibe **3** und der Zahnriemenscheibe **2** eine Spannung in dem Zahnriemen **5**. Dadurch wird dieser mit seinem Rücken an die Gegenrolle **4** gezogen und das Faserband **6** zwischen dem Rücken des Zahnriemens **5** und der Gegenrolle **4** im Bereich des Umschlingungswinkels α₁ eingeklemmt. Dabei wird bei auf das Faserband **6** wirkender Abzugskraft die von der gebremsten Zahnriemenscheibe **3** ausgehende Bremskraft auf das Faserband **6** übertragen, wobei sie sich als Spannung desselben auswirkt.

Den für eine Spannung des Zahnriemens **5** erforderlichen Antrieb erhält dieser bereits durch die Reibung des Faserbandes **6** auf dem Rücken des Zahnriemens **5** im Bereich des Umschlingungswinkels α₂ auf der Zahnriemenscheibe **2**. Diese Reibung ist um so größer, je größer die von der auf die gebremste Zahnriemenscheibe **3** wirkenden Bremskraft abhängige Spannung des Faserbandes **6** ist. Um so größer ist auch die Kraft, mit der das Faserband **6** zwischen dem Rücken des Zahnriemens **5** und der Gegenrolle **4** festgehalten wird.

Bei geringem Reibwert zwischen dem Zahnriemen **5** und dem Faserband **6** und dem geringen Umschlingungswinkel α₂ kann die Reibkraft zwischen dem Zahnriemen **5** und dem Faserband **6** zu gering sein, um den Zahnriemen **3** ausreichend vorzuspannen, so daß es zu unkontrolliertem Schlupf des Faserbandes **6** in der Spannvorrichtung kommt. Dies kann durch eine auf den Zahnriemen **5** wirkende Spannrolle verhindert werden, die den Druck des Zahnriemens **5** auf die Gegenrolle **4** verstärkt. Die Aufgabe einer Spannrolle kann z.B. die Gegenrolle **4** dadurch erfüllen, daß ihre Achsenposition gegen die Zwischen-Zahnriemenscheibe **3** hin verstellbar ist.

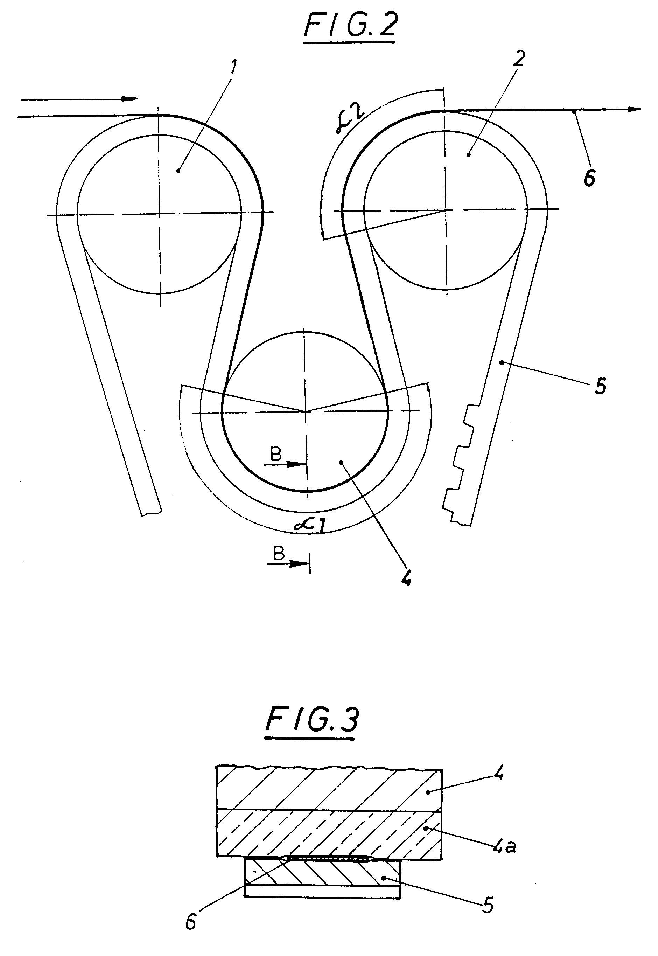

Wenn die Gegenrolle **4** lediglich mit einer harten Oberfläche auf dem durchlaufenden Faserband **6** abrollt,wird die Bremskraft nur einseitig über den Rücken des Zahnriemens **5** auf das Faserband **6** übertragen. Die Gegenrolle **4** erfüllt dann nur die Aufgabe, das Faserband **6** gegen den Zahnriemen **5** zu drücken. Es ist indessen erstrebenswert, daß die Bremskraft auf beide Seiten des Faserbandes **6** übertragen wird. Dies wird insbesondere bei dünnen Faserbändern dadurch erreicht, daß der Zahnriemen **5** eine elastische, rutschhemmende Rückseite hat und/oder die Gegenrolle **4** mit einer Ummantelung **4a** aus elastischem Material mit rutschhemmender Oberfläche versehen ist, wobei der Zahnriemen **5** und die Gegenrolle **4** breiter sind, als das zu spannende Faserband **6**. Dieses drückt sich dann, wie in Fig. 3 anschaulich gemacht, in die Mantelschicht **4a** der Gegenrolle **4** und gegebenenfalls auch in den Rücken des Zahnriemens **5** ein. So kommt es seitlich vom Faserband **6** zu einem unmittelbaren Reibkontakt zwischen dem Zahnriemen **5** und der Gegenrolle **4**, so daß ein Teil der Bremskraft aus dem Zahnriemen **5** in die Gegenrolle **4** und von dieser auf die "Rückseite" des Faserbandes **6** übertragen wird.

Eine weitere Vervollkommnung der erfindungsgemäßen Spannvorrichtung besteht darin, daß zusätzlich die Gegenrolle **4** bremsbar ist, wobei die auf sie wirkende Bremskraft mit der auf die Zwischen-Zahnriemenscheibe **3** wirkende Bremskraft abstimmbar ist.

Die Anwendung Erfindung ist nicht auf das vorstehend beschriebene bevorzugte Ausführungsbeispiel beschränkt. Wie aus Anspruch 3 hervorgeht, können die Riemenscheiben auch als Keilriemenscheiben ausgebildet sein, wobei der Riemen ein Keilriemen ist.

Wie aus Anspruch 1 abzuleiten ist, kann die Spannvorrichtung auch nur zwei im Abstand voneinander gelagerte Riemenscheiben mit einem sie umlaufenden Riemen haben, wobei zwischen diesen eine etwas kleinere, von dem Rücken des Riemens auf einem Teil ihres Umfanges umlaufene Gegenrolle so gelagert ist, daß der Riemen von der ausgangsseitigen Riemenscheibe frei an der Gegenrolle mit dem sie umlaufenden Teil des Riemens vorbei zur einlaufseitigen Riemenscheibe beweglich ist. Diese Ausführung hat zwar den Vorteil, daß weniger Bauteile und weniger Bauraum erforderlich sind.

Dem gegenüber hat sie aber den Nachteil, daß die zur Übertragung der Bremskraft auf das Faserband verfügbare Bandlänge kürzer ist, weil der Umschlingungswinkel des Riemens auf der Gegenrolle verhältnismäßig klein ist.

Die Spannvorrichtung kann aber auch, wie aus Anspruch 5 hervorgeht, vier jeweils auf einer Ecke eines Vierecks gelagerte Riemenscheiben und eine in der Mitte des Vierecks gelagerte Gegenrolle haben, wobei wenigstens eine der Riemenscheiben, die den das Faserband führenden Riemenscheiben gegenüberliegenden und/oder die eingangsseitige Riemenscheibe bremsbar sind. Diese Ausführungsform hat den Nachteil, daß sie mehr Bauteile und auch etwas mehr Bauraum benötigt. Dem steht aber der Vorteil gegenüber, daß bei einer mit ihrem Durchmesser und dem sie umschlingenden Riemen den Raum zwischen den Riemenscheiben ausfüllenden Gegenrolle der Umschlingungswinkel des Riemens auf der Gegenrolle besonders groß ist und somit eine besonders große Länge des Faserbandes zur Aufnahme der Bremskraft verfügbar ist.

## Patentansprüche

1. Vorrichtung zum kontrollierbaren Spannen eines Faserbandes oder -stranges in einer Anlage zum Wickeln von Gegenständen aus faserarmiertem Kunststoff mit wenigstens zwei im Abstand voneinander achsparallel gelagerten Riemenscheiben (1, 2) und einem sie umlaufenden Riemen (5), wobei zwischen den Riemenscheiben (1, 2) eine von dem Rücken des Riemens (5) auf einem Teil ihres Umfanges umlaufene, das zu spannende Faserband (6) gegen den Rücken des Riemens (5) haltende Gegenrolle (4) in einer solchen Position gelagert ist, daß der Riemen (5) von der ausgangsseitigen Riemenscheibe (2) an der Gegenrolle (4) mit dem sie umlaufenden Teil des Riemens (5) vorbei zur einlaufseitigen Riemenscheibe (1) frei beweglich ist, das Faserband (6) zwischen dem Riemen (5) und der Gegenrolle (4) läuft und wobei auf wenigstens eine der das Faserband (6) kontaktierenden Flächen eine Bremskraft wirkt,
**dadurch gekennzeichnet,**
daß mit Ausnahme der auslaufseitigen Riemenscheibe (2) wenigstens eine Riemenscheibe (1 und/oder 3) bremsbar ist und daß die einander kontaktierenden Flächen der Riemenscheiben (1, 2, 3) einerseits und des Riemens (5) andererseits an sich bekannte kongruierende, schlupfhindernde Formen haben.

2. Vorrichtung nach Anspruch 1,
**dadurch gekennzeichnet,**
daß die Riemenscheiben als Zahnriemenscheiben (1, 2, 3) ausgebildet sind, wobei der Riemen ein Zahnriemen (5) ist.

3. Vorrichtung nach Anspruch 1,
**dadurch gekennzeichnet,**
daß die Riemenscheiben als Keilriemenscheiben ausgebildet sind, wobei der Riemen ein Keilriemen ist.

4. Vorrichtung nach einem der Ansprüche 1 bis 3,
**dadurch gekennzeichnet,**
daß die Gegenrolle (4) bremsbar ist, wobei die auf sie wirkende Bremskraft mit der auf die bremsbaren Zahnriemenscheiben (1 und/oder 3) wirkenden Bremskraft abstimmbar ist.

5. Vorrichtung nach einem der Ansprüche 1 bis 4,
**dadurch gekennzeichnet,**
daß der Riemen (5) und die Gegenrolle (4) breiter sind, als das zu spannende Faserband (6), wobei der Rücken des Riemens (5) und die Gegenrolle (4) in den das Faserband (6) seitlich überragenden Bereichen in Reibkontakt stehen.

6. Vorrichtung nach einem der Ansprüche 1 bis 5,
**dadurch gekennzeichnet,**
daß der Rücken des Riemens (5) aus elastischem Material mit rutschhemmender Oberfläche besteht und/oder die Gegenrolle (4) eine Mantelschicht (4a) aus elastischem Material mit rutschhemmender Oberfläche aufweist.

7. Vorrichtung nach einem der Ansprüche 1, 2 oder 4 bis 6,
**dadurch gekennzeichnet,**
daß sie drei Zahnriemenscheiben (1, 2, 3) aufweist, deren Achsen parallel zueinander auf den Ecken eines Dreiecks angeordnet sind, wobei
- innerhalb dieses Dreiecks zwischen den Zahnriemenscheiben (1, 2, 3) parallel zu deren Achsen eine Gegenrolle (4) gelagert ist,
- über die Zahnriemenscheiben (1, 2, 3) ein von der das zu spannende Faserband in die Spannvorrichtung führenden Zahnriemenscheibe (1) aus mit seinem Rücken die Gegenrolle (4) zu der das Faserband (6) aus der Spannvorrichtung herausführenden Zahnriemenscheibe (2) hin umlaufender und das Faserband (6) an die Gegenrolle (4) ziehender Zahnriemen (5) gespannt ist und
- die auf der der einlaufseitigen Zahnriemenscheibe (1) und der auslaufseitigen Zahnriemenscheibe (2) gegenüberliegenden dritten Ecke des Dreiecks gelagerte Zwischen-Zahnriemenscheibe (3) und/oder die einlaufseitige Zahnriemenscheibe (1) mit an sich bekannten Mitteln bremsbar sind.

8. Vorrichtung nach einem der Ansprüche 1, 2 oder 4 bis 7,
**dadurch gekennzeichnet,**
daß sie vier jeweils auf einer Ecke eines Vierecks achsparallel gelagerte Zahnriemenscheiben aufweist, wobei
- innerhalb dieses Vierecks zwischen den Zahnriemenscheiben parallel zu deren Achsen eine Gegenrolle gelagert ist,
- über die Zahnriemenscheiben ein von der das zu spannende Faserband in die Spannvorrichtung führenden Zahnriemenscheibe aus mit seinem Rücken die Gegenrolle zu der das Faserband aus der Spannvorrichtung herausführenden Zahnriemenscheibe hin umlaufender und das Faserband an die Gegenrolle ziehender Zahnriemen gespannt ist und
- wenigstens eine den das Faserband führenden Zahnriemenscheiben gegenüberliegende Zahnriemenscheibe und/oder die einlaufseitige Zahnriemenscheibe mit an sich bekannten Mitteln bremsbar sind.

9. Vorrichtung nach einem der Ansprüche 1 bis 8,
**dadurch gekennzeichnet,**
daß die Spannung des Riemens (5) durch Veränderung der Achspositionen wenigstens einer der Riemenscheiben (1, 2, 3) und der Gegenrolle (4) regulierbar ist.

## Claims

1. A device for controllably tensioning a sliver or strand of fibers in a system for winding objects of fiber-reinforced plastics, comprising at least two spaced-apart belt pulleys (1, 2) supported in axially parallel fashion, and a belt (5) running over said pulleys, a counter-roller (4) which is travelled over by the back of said belt (5) on part of its circumference and which holds said sliver (6) to be tensioned against the back of said belt (5) being supported between said belt pulleys (1, 2) in such a position that said belt (5) is freely movable from said belt pulley (2) at the outlet side past said counter-roller (4) with the part of said belt (5) traveling thereover to said belt pulley (1) at the inlet side, said sliver (6) running between said belt (5) and said counter-roller (4) and a braking force acting on at least one of the surfaces contacting said sliver (6),
**characterized in**
that, with the exception of said belt pulley (2) at the outlet side, at least one belt pulley (1 and/or 3) is adapted to be braked and that the contacting surfaces of said belt pulleys (1, 2, 3), on the one hand, and of said belt (5), on the other hand, have congruent antislip shapes that are per se known.

2. A device according to claim 1,
**characterized in**
that said belt pulleys are designed as toothed belt pulleys (1, 2, 3), said belt being a toothed belt (5).

3. A device according to claim 1,
**characterized in**
that said belt pulleys are designed as V-belt pulleys, said belt being a V-belt.

4. A device according to any one of claims 1 to 3,
**characterized in**
that said counter-roller (4) is adapted to be braked, the braking force which acts thereon being adjustable to the braking force acting on said brakable toothed belt pulleys (1 and/or 3).

5. A device according to any one of claims 1 to 4,
**characterized in**
tht said belt (5) and said counter-roller (4) are broader than said sliver (6) to be tensioned, the back of said belt (5) and said counter-roller (4) being in frictional contact in the areas laterally projecting over said sliver (6).

6. A device according to any one of claims 1 to 5,
**characterized in**
that the back of said belt (5) consists of an elastic material having an antislip surface and/or said counter-roller (4) has a covering layer (4a) made of an elastic material with an antislip surface.

7. A device according to any one of claims 1, 2 or 4 to 6,
**characterized in**
that said device comprises three toothed belt pulleys (1, 2, 3) whose axes are arranged in parallel with one another on the corners of a triangle, wherein
- a counter-roller (4) is supported within said triangle between said toothed belt pulleys (1, 2, 3) in parallel with the axes thereof,
- a toothed belt (5) which travels from said toothed belt pulley (1) guiding said sliver to be tensioned into said tensioning device, with its back over said counter-roller (4), to said toothed belt pulley (2) guiding said sliver (6) out of said tensioning device and which pulls said sliver (6) onto said counter-roller (4) is tensioned over said toothed belt pulleys (1, 2, 3), and
- said intermediate toothed belt pulley (3) which is supported on the third corner of said triangle which is opposite to said toothed belt pulley (1) at the inlet side and to the toothed belt pulley (2) at the outlet side, and/or said toothed belt pulley at the inlet side are adapted to be braked with means that are per se known.

8. A device according to any one of claims 1, 2 or 4 to 7,
**characterized in**
that it comprises four toothed belt pulleys of which each is supported on a corner of a quadrangle in axially parallel fashion, wherein
- a counter-roller is supported within said quadrangle between said toothed belt pulleys in parallel with the axes thereof,
- a toothed belt which travels from said toothed belt pulley guiding said sliver to be tensioned into said tensioning device, with its back over said counter-roller (4), to said toothed belt pulley guiding said sliver out of said tensioning device and which pulls said sliver onto said counter-roller is tensioned over said toothed belt pulleys, and
- at least one toothed belt pulley which is opposite to said toothed belt pulleys guiding said sliver, and/or said toothed belt pulley at the inlet side are adapted to be braked with means that are per se known.

9. A device according to any one of claims 1 to 8,
**characterized in**
that the tension of said belt (5) can be regulated by varying the axial positions of at least one of said belt pulleys (1, 2, 3) and said counter-roller (4).

## Revendications

1. Dispositif de tension contrôlée d'un ruban ou d'un écheveau de fibres dans un appareil d'enroulage d'objets en plastique armé de fibres, avec au moins deux poulies (1, 2) situées parallèlement à l'axe et distancées l'une de l'autre et une courroie (5) les contourant, un rouleau opposé (4) maintenant le ruban de fibres (6) à tendre contre le revers de la courroie (5) et étant situé entre les deux poulies (1, 2), contourné par le revers de la courroie (5) sur une partie de sa circonférence et placé dans une position telle que la courroie (5) puisse bouger librement de la poulie de sortie (2) en passant par le rouleau opposé (4) avec la partie de la courroie qui le contourne jusqu'à la poulie d'entrée (1), et que le ruban de fibres (6) circule entre la courroie (5) et le rouleau opposé (4), et qu'en même temps une force de freinage agit sur au moins une des surfaces en contact avec le ruban de fibres (6), CARACTERISE EN CE QU'à l'exception de la poulie de sortie (2), au moins l'une des poulies (1 et / ou 3) soit freinable et que les surfaces en contact d'une part des poulies (1, 2, 3) et d'autre part de la courroie (5) aient des formes congruantes et antidérapantes connues en soi.

2. Dispositif selon la revendication 1, CARACTERISE EN CE QUE les poulies soient des poulies à courroie dentée (1, 2, 3), la courroie étant une courroie dentée (5).

3. Dispositif selon la revendication 1, CARACTERISE EN CE QUE les poulies soient des poulies trapézoïdales, la courroie étant une courroie trapézoïdale.

4. Dispositif selon l'une des revendications 1 à 3, CARACTERISE EN CE QUE le rouleau opposé (4) soit freinable, la force de freinage agissant sur lui étant ajustable à celle agissant sur les poulies à courroie dentée (1 et/ou 3) freinables.

5. Dispositif selon l'une des revendications 1 à 4, CARACTERISE EN CE QUE la courroie (5) et le rouleau opposé (4) soient plus larges que le ruban de fibres (6) à tendre, le revers de la courroie (5) et le rouleau opposé (4) étant en contact de frottement dans les zones dépassant latéralement le ruban de fibres (6).

6. Dispositif selon l'une des revendications 1 à 5, CARACTERISE EN CE QUE le revers de la courroie (5) se compose d'un matériau élastique avec une surface antidérapante et / ou que le rouleau opposé (4) possède un revêtement (4a) de matériau élastique avec une surface antidérapante.

7. Dispositif selon l'une des revendications 1, 2 ou 4 jusqu'à 6, CARACTERISE EN CE QU'il possède trois poulies à courroie dentée (1, 2, 3) dont les axes parallèles entre eux soient situés aux coins d'un triangle, et qu'en même temps
- un rouleau opposé (4) soit situé à l'intérieur de ce triangle entre les poulies à courroie dentée (1, 2, 3), parallèlement à leurs axes,
- une courroie dentée (5) soit tendue sur les poulies à courroie dentée (1, 2, 3), de la poulie (1) qui amène le ruban de fibres à tendre dans le dispositif de tension, en contournant de son revers le rouleau opposé (4), à la poulie (2) emmenant le ruban de fibres (6) à tendre hors du dispositif de tension, et tire le ruban de fibres (6) contre le rouleau opposé (4), et
- la poulie à courroie dentée intermédiaire (3) située sur le troisième coin du triangle opposé à la poulie de sortie (2) et à la poulie d'entrée (1) et/ou la poulie à courroie dentée d'entrée (1) soient freinables grâce à des moyens connus en soi.

8. Dispositif selon l'une des revendications 1, 2 ou 4 jusqu'à 7, CARACTERISE EN CE QU'il possède quatre poulies à courroie dentée à axes parallèles, situées respectivement sur les coins d'un rectangle, et qu'en même temps
- un rouleau opposé soit situé à l'intérieur de ce rectangle entre les poulies à courroie dentée et parallèlement à leur axes,
- une courroie dentée soit tendue sur les poulies, de la poulie à courroie dentée amenant le ruban de fibres à tendre dans le dispositif de tension, en contournant de son revers le rouleau opposé, jusqu'à la poulie à courroie dentée emmenant le ruban de fibres hors du dispositif de tension, et maintienne le ruban de fibres contre le rouleau opposé, et
- au moins une poulie à courroie dentée opposée aux poulies conduisant le ruban de fibres et/ou la poulie à courroie dentée d'entrée soient freinables grâce à des moyens connus en soi.

9. Dispositif selon l'une des revendications 1 à 8, CARACTERISE EN CE QUE la tension de la courroie (5) soit réglable en changeant la position axiale d'au moins une des poulies (1, 2, 3) et du rouleau opposé (4).
